# EUROPÄISCHE PATENTSCHRIFT

(11) **EP 0 928 799 B1**
(45) Veröffentlichungstag und Bekanntmachung des Hinweises auf die Patenterteilung: **30.03.2005**
(21) Anmeldenummer: 98124693.7
(22) Anmeldetag: 24.12.1998
(51) Int. Cl.: C08G 18/73, C08G 18/70, C09D 175/04

(54) **Verwendung spezieller Isocyanate zur Herstellung wässriger PUR-Überzüge**
Use of special isocyanates for the production of aqueous PUR coatings
Utilisation d'isocyanates particuliers pour la préparation des revêtements aqueux de PUR

(30) Priorität: 07.01.1998 DE 19800286
(43) Veröffentlichungstag der Anmeldung: 14.07.1999
(73) Patentinhaber: Bayer MaterialScience AG, 51368 Leverkusen (DE)
(72) Erfinder: Richter, Frank Dr., 51373 Leverkusen (DE); Sonntag, Michael Dr., 51519 Odenthal (DE); Halpaap, Reinhard Dr., 51519 Odenthal (DE); Bock, Manfred Dr., 51373 Leverkusen (DE)

(56) Entgegenhaltungen:
- DE-A- 4 226 270
- US-A- 4 314 048
- PATENT ABSTRACTS OF JAPAN vol. 095, no. 011, 26. Dezember 1995 & JP 07 228651 A (ASAHI CHEM IND CO LTD), 29. August 1995
- PATENT ABSTRACTS OF JAPAN vol. 096, no. 010, 31. Oktober 1996 & JP 08 151358 A (ASAHI CHEM IND CO LTD), 11. Juni 1996
- DATABASE WPI Section Ch, Week 8303 Derwent Publications Ltd., London, GB; Class A25, AN 83-06196K XP002099538 & JP 57 198761 A (ASAHI CHEM IND CO LTD) , 6. Dezember 1982

## Beschreibung

Die Erfindung betrifft die Verwendung von 4-Isocyanatomethyl-1,8-octandiisocyanat (Triisocyanatononan, TIN) und TIN enthaltenden Mischungen zur Herstellung aus wäßrigem Medium applizierbarer Polyurethanlacke und -beschichtungen

Die Herstellung und Verwendung wasserdispergierbarer Polyisocyanate, d.h. von Isocyanaten mit mindestens zwei NCO-Gruppen im Molekül, ist bekannt (vgl. EP-A 540 985 sowie darin zitierte Schriften). Sie erlangen bei der Herstellung von Lacken und Beschichtungsmitteln auf Polyurethanbasis, die bei der Applikation einen wesentlich geringeren Anteil an flüchtigen organischen Komponenten (im weiteren: VOC), insbes. Lösungsmittel, abgeben, zunehmend wirtschaftliche Bedeutung. Wegen der geringen Vergilbungsneigung unter Lichteinfluß kommt insbesondere Vertretern, die ausschließlich (cyclo)aliphatisch gebundene NCO-Gruppen enthalten, eine hervorragende Bedeutung bei der Herstellung qualitativ hochwertiger Lackrohstoffe und Beschichtungsmittel zu.

Um die an sich hydrophoben und gegenüber Wasser reaktiven Polyisocyanate, die aus der 'klassischen', d.h. im wesentlichen wasserfreie Bedingungen erfordernden 2-K-Technologie bekannt sind, in Wasser zu dispergieren, bedient man sich verschiedener Stoffe und Verfahren.

So ist es möglich, durch Einwirkung extrem hoher Scherkräfte klassische Polyisocyanathärter z.B. Derivate aliphatischer Diisocyanate wie Hexamethylendiisocyanat (HDI), Isophorondiisocyanat (EPDI) oder hydriertem 4,4'-Diphenylmethandiisocyanat (H₁₂MDI, Desmodur® W = Handelprodukt der Bayer AG), in Wasser zu dispergieren. Bei den beiden letztgenannten ist allerdings die (Mit)verwendung von Lösungsmitteln unabdingbar, da es sich bei den 100%-solids Systemen um Feststoffe bzw. hochviskose Öle handelt. Diese Dispersionen ergeben qualitativ hochwertige Beschichtungen, die denen, die bei Anwendung wasserfreier Verarbeitungstechnologien resultieren, im wesentlichen ebenbürtig sind (vgl. L. Kahl, M. Bock, E. Jürgens u. H.-J. Laas in: 'Farbe und Lack' 102. Jahrgang, 3/96, S. 88-100 sowie darin zitierte Literatur). Nachteilig hierbei ist der Aufwand der Düsenstrahldispergierung, da diese Technologie nicht in allen Applikationsfeldern, insbesondere der Autoreparaturlackierung, zur Verfügung steht.

Andererseits ist, z.B. nach der Lehre der EP-A 540 985, der chemische Einbau hydrophilierender Komponenten in o.g. klassischen Polyisocyanathärtern vorgeschlagen worden, um die Hydrophobie dieser Spezies, die ihre direkte Dispergierung unter Einwirkung geringer Scherkräfte (z.B. Einrühren von Hand) vereitelt, zu überwinden. Der Einbau dieser hydrophilierenden Komponenten erfolgt jedoch häufig an den freien NCO-Gruppen des Polyisocyanates (z.B. durch eine Urethanisierung mit bestimmten, z.B. monofunktionellen Polyethern). Deshalb ist mit der Hydrophilierung naturgemäß eine Erniedrigung der NCO-Funktionalität der Polyisocyanathärter verbunden einhergehend mit einem Abfall des für die Vernetzung auf dem Substrat zur Verfugung stehenden Gehaltes an wertvollen NCO-Gruppen.

Weiterhin ist die Hydrophilierung von Polyisocyanaten durch Zugabe sog. 'externer' Emulgatoren beschrieben worden (z.B. EP-A 557 844 und darin zitierte Schriften). Diese Methode birgt neben dem ökonomischen Nachteil eines zusätzlichen Verfahrensschrittes den entscheidenden Makel in sich, daß die verwendeten externen Emulgatoren im Lackfilm verbleiben müssen und dessen Eigenschaftsbild nachteilig beeinflussen; z.B. durch sog. 'Ausschwitzen', durch eine größere Hydrophilie und, daraus resultierend, eine größere Empfindlichkeit des Lackes bzw. der Beschichtung gegenüber der Einwirkung von Wasser, Geruchsprobleme durch den häufig intensiven und unangenehmen Eigengeruch der Emulgatoren bzw. aus ihnen gebildeter Produkte etc..

Aufgabe der vorliegenden Erfindung war es deshalb, wasserdispergierbare Polyisocyanate bzw. Polyisocyanatmischungen zur Verfügung zu stellen, die sich durch eine leichte Einarbeitbarkeit auch bei niedrigen Scherkräften auszeichnen (z.B. durch 'Einrühren von Hand') und dabei keine hydrophilierenden Zusätze enthalten.

Diese Aufgabe konnte durch den Einsatz von 4-Isocyanatomethyl-1,8-octandiisocyanat (Triisocyanatononan, im folgenden: TIN) bzw. TIN enthaltender Mischungen mit anderen, an sich bekannten Lackpolyisocyanaten des Standes der Technik, gelöst werden.

Gegenstand der vorliegenden Erfindung ist die Verwendung von 4-Isocyanatomethyl-1,8-octandiisocyanat (Triisocyanatononan, TIN), gegebenenfalls in Abmischung mit weiteren Polyisocyanaten, ausgewählt aus der Gruppe der HDI-, IPDI-Polyisocyanate oder Polyisocyanate des hydrierten Diphenylmethan-Diisocyanantes, als Vernetzer-Komponente zur Herstellung wässriger Zweikomponenten- Polyurethanlacke und -beschichtungen, dadurch gekennzeichnet, dass TIN zu mindestens 50 Masse-% in der Polyisocyanatkomponente vorliegt. Gegenstand der vorliegenden Erfindung ist weiterhin die entsprechende Verwendung von TIN in Abmischung mit weiteren, Isocyanatgruppen enthaltenden konventionellen Polyisocyanaten aus der Gruppe der Biurete, Uretdione (Dimerisate), Allophanate sowie Isocyanurate, Iminooxadiazindione ('Trimerisate') des Hexamethylendiisocyanates, Isophorondiisocyanates, hydrierten Diphenylmethandiisocyanates bzw. anderer, ggf. cyclischer, aliphatischer Diisocyanate, wobei der Anteil des konventionellen Polyisocyanates in den erfindungsgemäß einzusetzenden Mischungen 50 Masse-% nicht überschreitet.

Der Erfindung liegt die überraschende Beobachtung zugrunde, dass sich TIN sehr gut auch ohne die Anwendung hoher Scherkräfte oder hydrophilierender Zusätze in Wasser dispergieren lässt und darüber hinaus sogar in der Lage ist, gewisse Mengen anderer, an sich hydrophober Polyisocyanate der oben aufgeführten Art mit in die wässrige Dispersion bzw. Emulsion 'einzuarbeiten'.

Es ist bekannt, dass die Viskosität von (Poly)isocyanaten in Zusammenhang zu ihrer Wasserdispergierbarkeit steht (z.B. EP-A 0 358 979). Dabei soll eine niedrige Viskosität generell zu einer besseren Dispergierbarkeit führen. Allerdings ist diese Abhängigkeit nicht generell gegeben, wie vergleichende eigene Untersuchungen belegen (l.c. Beispiel 1).

Auch wird beispielsweise in der EP-A 0 358 979, (Seite 2, Zeile 54 bis Seite 3, Zeile 1) explizit darauf verwiesen, dass die NCO-reaktiven Komponenten, neben ggf. zu verwendenden Hilfs- und Zusatzstoffen, vor der Zugabe der Isocyanatkomponente in der wässrigen Polymerisatlösung und/oder -dispersion vorliegen müssen. Es kann mithin davon ausgegangen werden, dass diese Hilfs- und Zusatzstoffe einen nicht unentscheidenden Einfluss auf die Dispergierfähigkeit des Polyisocyanates haben, letzteres selbst, in Abwesenheit von Zusatzstoffen, mithin durchaus nicht wasserdispergierbar sein muß.

TIN läßt sich aus dem zugrundeliegenden Triamin, ggf. nach Überführung in ein leichter der Phosgenierung zugängliches Derivat wie z. B. ein (Tris)hydrochlorid, -Carbaminat o.ä., durch ein Phosgenierverfahren des Standes der Technik in kondensierter Phase oder in der Gasphase herstellen (z.B. DE-A 3 109 276, EP-A 749 958). Auch sind phosgenfreie Verfahren zu seiner Herstellung vorgeschlagen worden (USA 5 189 205). Das Triisocyanat fällt dabei als hochsiedende, nahezu geruchlose Flüssigkeit mit einem gemäß DIN 53 185 titrierten NCO-Gehalt von 48 - 51 Masse-% bei einer gaschromatographisch bestimmten Reinheit von nicht weniger als 95 % an.

Der errechnete NCO-Gehalt von TIN beläuft sich auf 50,16 %. Wird z.B. titrimetrisch nach DIN 53 185 ein geringfügig höherer NCO-Gehalt gefunden, deutet das auf Verunreinigungen im TIN hin, die einen höheren Gehalt an Amin-reaktiven funktionellen Gruppen aufweisen als TIN selbst, z.B. ungesättigte C₉-Triisocyanate.

Ein gewisser Gehalt an Verunreinigungen hat allerdings keinen Einfluß auf die erfindungsgemäße Verwendbarkeit von TIN in den hier beschriebenen Applikationsfeldern, wie anhand von Modellversuchen mit sehr reinem TIN und bewußt stärker verunreinigtem Material sichergestellt werden konnte.

TIN kann mit allen bekannten NCO-Reaktionspartnern des Standes der Technik kombiniert werden, die für den Einsatz in wäßrigen Systemen geeignet sind. Beispiele für derartige Reaktionspartner sind OH- sowie NH-funktionelle Polyether, Polyester, Polyacrylate, Polyamine und Polycarbonate, ggf. in Abmischung miteinander. Beispiele zur Herstellung und Verwendung derartiger Reaktionspartner finden sich u.a. in der DE-A 4 137 896, 3 829 587.

Man erhält bei der erfindungsgemäßen Verwendung von TIN bzw. TIN enthaltender Mischungen qualitativ hochwertige Polyurethanlacke und -beschichtungen, die sich gegenüber den Produkten des Standes der Technik, neben dem erfindungswesentlichen Vorteil der bereits vorstehend erwähnten besseren Emulgierbarkeit in Wasser durch eine Reihe weiterer Vorteile auszeichnen. Es ist dabei mitunter schwierig, die dem geschulten Fachmann sofort in's Auge fallenden positiven Besonderheiten die durch Verwendung bzw. Mitverwendung von TIN resultieren in quantitativ meßbaren Größen auszudrücken. Deshalb seien an dieser Stelle lediglich qualitative Begriffe wie Fülle, Gleichmäßigkeit und Transparenz der Beschichtung aufgeführt. Aber auch die (meßbaren) Lackeigenschaften wie verbesserte Chemikalien- und Wasserbeständigkeit, eine höhere Härte und ein früherer Härteanstieg während des Abbindens sowie eine schnellere Trocknung sind Besonderheiten, die beim erfindungsgemäßen (Mit)einsatz von TIN gegenüber Produkten des Standes der Technik hervortreten.

Zur erfindungsgemäßen Verwendung von TIN bzw. TIN enthaltender Mischungen können in den Beschichtungen auch weitere Hilfs- und Zusatzmittel verwendet werden, wie z.B. Benetzungsmittel, Verlaufsmittel, Hautverhinderungsmittel, Antischaummittel, Mattierungsmittel, viskositätsregulierende Stoffe (Verdicker, Thixotropiermittel), Pigmente, Farbstoffe, UV-Absorber und Stabilisatoren gegen thermische und oxidative Einflüsse.

Die erfindungsgemäße Verwendung von TIN bzw. TIN enthaltender Mischungen kann zur Beschichtung einer Vielzahl von Materialien dienen, wie z.B. Holz, Kunststoff, Leder, Metall, Papier, Beton, Mauerwerk, Keramik, Textilien usw..

### Beispiele

In den Beispielen beziehen sich alle Prozentangaben, wenn nicht anders vermerkt, auf die Masse.

Die dynamischen Viskositäten wurden bei 23 °C mit einem Rotationsviskometer mit Kegel-Platte-Meßanordnung PK 100 der Fa. Haake aufgenommen (Beispiel 1) bzw. nach den im einzelnen aufgeführten DIN-Methoden durchgeführt. Durch Messungen bei unterschiedlichen Schergeschwindigkeiten wurde sichergestellt, daß das Fließverhalten der erfindungsgemäßen Polyisocyanatmischungen wie auch das der Vergleichsprodukte dem idealer Newtonscher Flüssigkeiten entspricht. Die Angabe der Schergeschwindigkeit kann deshalb entfallen.

Die Bestimmung des NCO-Gehaltes erfolgte nach DIN 53 185.

In allen Beispielen werden die erfindungswesentlichen Messungen und Beobachtungen exemplarisch am Beispiel von TIN, bzw. an Abmischungen von TIN mit HDI-Polyisocyanaten, überwiegend vom Isocyanurattyp ("Trimerisate") als höherviskose Komponente dargestellt. Dies erfolgt nur aus Gründen der besseren Vergleichbarkeit der erhaltenen Ergebnisse und bedeutet keine Beschränkung der Erfindung auf diese Produkte. Entsprechendes gilt für Mischungen auf Basis anderer (Poly)isocyanate und/oder anderer Strukturtypen, als der Isocyanurat-Polyisocyanate ("Trimerisate").

### Beispiel 1

In jeweils einem Reagenzglas werden:
- 1.: TIN
- 2.: Hexamethylendiisocyanat (HDI)
- 3.: Isophorondiisocyanat (IPDI)
- 4.: eine Mischung von 50 % TIN und 50 % eines HDI-Isocyanurat-Polyisocyanates mit einem NCO-Gehalt von 23,3 % und einer Viskosität von 1180 mPa·s, hergestellt nach der Lehre der DE-A 38 06 276 (Viskosität der Mischung: 70 mPa·s)
- 5.: eine Mischung von 50 % TIN und 50 % eines HDI-Isocyanurat-Polyisocyanates mit einem NCO-Gehalt von 21,8 % und einer Viskosität von 3080 mPa·s, hergestellt nach der Lehre der DE-A 38 06 276 (Viskosität der Mischung: 100 mPa·s)
- 6.: eine Mischung von 70 % TIN und 30 % eines HDI-Isocyanurat-Polyisocyanates mit einem NCO-Gehalt von 23,3 % und einer Viskosität von 1180 mPa·s, hergestellt nach der Lehre der DE-A 38 06 276 (Viskosität der Mischung: ≤ 50 mPa·s)
- 7.: eine Mischung von 70 % TIN und 30 % eines HDI-Isocyanurat-Polyisocyanates mit einem NCO-Gehalt von 21,8 % und einer Viskosität von 3080 mPa·s, hergestellt nach der Lehre der DE-A 38 06 276 (Viskosität der Mischung: ≤ 50 mPa·s)
so vorgelegt, daß die Füllhöhe in allen Gläsern etwa identisch ist. Letztere wird markiert und es wird jeweils mit etwa dem gleichen Volumen entionisierten Wassers vorsichtig überschichtet (2 Phasen), anschließend mit einem Stopfen verschlossen und einige Sekunden intensiv geschüttelt, bis eine milchige, weiße Suspension entstanden ist.

Nun wird die Zeit bis zur Entmischung der Suspensionen gemessen, d.h., bis die Isocyanat-enthaltende Unterphase bei etwa 80 % der vorher markierten Füllhöhe angelangt ist. Dies ist nach folgenden Zeiträumen der Fall:
1. ca. 10 Minuten
2. ca. 30 Sekunden
3. ca. 40 Sekunden
4. ca. 1 Minute, 30 Sekunden
5. ca. 40 Sekunden
6. ca. 2 Minuten, 40 Sekunden
7. ca. 2 Minuten, 30 Sekunden.

Man erkennt aus diesem Beispiel einerseits, daß TIN eine hervorragende Dispergierbarkeit in Wasser aufweist und andererseits, daß die Viskosität des (Poly)isocyanates nicht der alleinig ausschlaggebende Parameter für eine gute Wasserdispergierbarkeit sein kann, denn die Isocyanate aus Beispiel 1, 2 und 3 haben nahezu dieselbe, niedrige Viskosität (≤ 10 mPa·s, die Meßungenauigkeit der eingangs geschilderten Methode ist in diesem Bereich zu groß, um hier weiter zu differenzieren, aus demselben Grund wurde bezüglich der Viskosität der im Versuch 6 und 7 eingesetzten Mischungen nur eine Obergrenze angegeben).

### Beispiel 2 (mit Vergleichsbeispielen)

Verwendung von reinem TIN (erfindungsgemäß, Rezeptur 3) bzw. TIN in Abmischung mit einem HDI-Trimer-Polyisocyanat (Desmodur® VP LS 2025/1, Produkt der Bayer AG, im weiteren LS 2025/1, erfindungsgemäß, Rezeptur 4) in wäßrigen Lacken im Vergleich zu Produkten des Standes der Technik (reines LS 2025/1 ohne TIN-Zusatz, Vergleichsbeispiel, Rezeptur 1) sowie einem hydrophil modifizierten Polyisocyanat (Bayhydur® 3100 der Bayer AG, im weiteren 3100, Vergleichsbeispiel, Rezeptur 2).

Als Polyolkomponente (Bindemittel) wurde in allen Rezepturen ein für den Einsatz in wäßrigen 2K-PUR Lacken geeignetes Polyacrylat gemäß DE-A 3 829 587 verwendet (Bayhydrol® VP LS 2235, Produkt der Bayer AG).

| Rezeptur-# | 1 | 2 | 3 | 4 |
|---|---|---|---|---|
| Desmodur® | LS 2025/1 | - | TIN | LS2025/1 +TIN (1:1) |
| Bayhydur® | - | 3100 | - | - |
| 80% in Proglyde® DMM¹⁾ | → | → | → | → |

| Komponente 1 | | | | |
|---|---|---|---|---|
| Bayhydrol® VP LS 2235 | 64,14 | 58,28 | 67,51 | 67,51 |
| Surfynol® 104 ²⁾ 50 % BG | 1,24 | 1,21 | 1,16 | 1,2 |
| Borchigel® PW 25 ³⁾ 25% PG/H₂O | 0,08 | 0,08 | 0,08 | 0,08 |
| Baysilone® OL 31, ⁴⁾ 10% BG | 1,0 | 1,0 | 1,0 | 1,0 |
| demin. H₂O für Auslaufzeit DIN 6 = 50'' | - | - | - | - |

| | | | | |
|---|---|---|---|---|
| ¹⁾ Dipropylenglykoldimethylether, Produkt der Fa. DOW Chemical | | | | |
| ²⁾ handelsübliches Substratbenetzmittel, Produkt der Fa. Air Products | | | | |
| ³⁾ handelsüblicher Verdicker, Produkt der Fa. Borchers | | | | |
| ⁴⁾ handelsübliches Slipadditiv, Produkt der Fa. Bayer | | | | |

| Rezeptur-# | 1 | 2 | 3 | 4 |
|---|---|---|---|---|
| Komponente 2 | | | | |
| Härter, 80% ig | 12,59 | 15,63 | 9,46 | 11,35 |
| Wasser für Spritzviskosität | 20,95 | 23,80 | 20,79 | 18,86 |
| Gesamt | 100,0 | 100,0 | 100,0 | 100,0 |
| Spritzverdünnung | H₂O | H₂O | H₂O | H₂O |
| NCO : OH | 1,5 | 1,5 | 1,5 | 1,5 |
| Festkörper (Gew.%) | 40,3 | 40,0 | 39,3 | 42,9 |
| Colöser (Gew.%) | 9,04 | 9,18 | 8,64 | 9,04 |
| VOC g/l | 183 | 187 | 180 | 174 |
| Dichte (kg/l) | 1,0 | 1,0 | 1,0 | 1,0 |
| pH-Wert | 8,2 | 8,0 | 8,0 | 7,9 |

| **Wäßriger 2K-PUR- Klarlack, Härtereinarbeitung 30" 2000U/min// Dissolver- scheibe ⌀ 40 mm bei einem Dispergiervolumen von 500 g in einem 1000 ml Gefäß (simuliert das 'Einarbeiten von Hand')** | | | | |
|---|---|---|---|---|
| Rezeptur-# | 1 | 2 | 3 | 4 |
| Bayhydrol® VP LS 2235 | -> | -> | -> | -> |
| Desmodur® | LS 2025/1 | - | TIN | LS2025/1 + TIN (1:1) |
| Bayhydur® | - | 3100 | - | - |
| | | | | |
| **Viskosität** Komp. 1DIN 6 (sec.)/pH-Wert | 35 / 8,0 | 35 / 8,0 | 35 / 8,0 | 35 / 8,0 |

| Viskosität Komponente 1 + 2 (DIN 4) // pH Wert // Opazität (0-5 ) | | | | |
|---|---|---|---|---|
| sofort | 15 /7,8/ 5 | 16/7,9/3 | 15/8,0/1 | 16/8,1/4 |
| nach 30 min | 15 /8,1/ 4 | 16 /7,9/ 0 | 15/7,9/0 | 16/7,9/0 |
| nach 60 min | 15 /8,0/4 | 15/7,8/0 | 17/7,7/0 | 18/7,7/0 |
| nach 120 min | 15/7,8/4 | 15/7,8/0 | 19/7,5/0 | 20/7,4/0 |
| nach 180 min | 16 /7,5/ 4 | 16/7,5/0 | 22/7,3/0 | 25/7,3/0 |
| **Trocknung (h)** T 1 | 1,5 | 1,5 | 1 | 1,5 |
| T 3 | 5 | 5 | 4 | 4,5 |
| **Trocknung** (0-5)30'60°C//30'60°C+1h | 2//0 | 2//0 | 1//0 | 1//0 |
| **Trübung** (0-5) 30'60°C // 30'60°C+1h | 4//4 | 1//1 | 1//1 | 2//2 |
| **Pendelhärte** (s) 1d RT | 57 | 23 | 39 | 49 |
| 7d RT | 69 | 36 | 53 | 69 |
| **Pendelhärte** (s) 30'60°C+2 h RT | 19 | 14 | 32 | 41 |
| + 3d RT | 46 | 29 | 81 | 75 |
| + 7d RT | 60 | 43 | 106 | 102 |

| **Lösemittelbeständigkeiten auf ALU + Basislack + Klarlack**^{**1)**} | | | | |
|---|---|---|---|---|
| 1d RT | 3344 | 3355 | 2233 | 2333 |
| 3d RT | 2343 | 2355 | 2222 | 2233 |
| 7d RT | 1233 | 1233 | 1121 | 1121 |
| 30'60°C+2hRT | 4555 | 4555 | 2344 | 2334 |
| +1d RT | 2344 | 2344 | 1111 | 1111 |
| +3d RT | 1233 | 1245 | 1000 | 1111 |
| + 7d RT | 1233 | 1233 | 0000 | 0011 |

| **Lösemittelbeständigkeiten auf Glasplatte + Klarlack (60 µm Trockenfilm)**^{**1)**} | | | | |
|---|---|---|---|---|
| 3d RT | 3444 | 4455 | 4233 | 4344 |
| + 7d RT | 3333 | 4233 | 4121 | 4222 |
| 30'60°C + 3d RT | 4444 | 4344 | 2222 | 2222 |
| + 7d RT | 3233 | 4233 | 1000 | 0000 |

| **Alkali(A)- und Säure-(S)-beständigkeiten auf ALU + Basislack + Klarlack**^{**2)**} | | | | |
|---|---|---|---|---|
| 5h A/S 3d RT | 1/1 | 1/1 | 1/1 | 1/1 |
| 5h A/S 7d RT | 1/1 | 1/1 | 1/1 | 1/1 |
| 5h A/S 30'60°C+3dRT | 1/2 | 1/2 | 1/1 | 1/1 |
| 5hA/S + 7d RT | 1/1 | 1/1 | 1/1 | 1/1 |

| **Alkali- und Säurebeständigkeiten auf Glasplatte + Klarlack (60 µm Trockenfilm)**^{**2)**} | | | | |
|---|---|---|---|---|
| 1h//5h +3dRT | 44//44 | 11//44 | 34//44 | 44//44 |
| 1h//5h +7d RT | 44//-- | 44//-- | 44//-- | 44//-- |
| 16h +7d RT | 21//-- | 11//-- | 11//-- | 11//-- |
| 1h//5h 30'60°C+3dRT | 41//43 | 44//44 | 21//32 | 33//33 |
| 1h//5h +7d RT | 44//-- | 44//-- | 44//-- | 44//-- |
| 16h +7d RT | 12//-- | 12 //-- | 11//-- | 11//-- |
| **Vertauf** RT // 30'60°C | 3/3 | 2/1 | 0/0 | 1/1 |
| **viesuelle Glanzbeurteilung** | 2-3 | 2 | 0 | 1 |
| **Glanz** 20° RT | 89 | 92 | 91 | 91 |
| **Haze** RT | 37 | <20 | <20 | <20 |
| **Glanz** 20° 30' 60°C | 90 | 91 | 91 | 90 |
| **Haze** 30' 60°C | 24 | 24 | <20 | 30 |
| **Spanschnitt** | zäh, weich | | zäh, hart | Mittelwert zw. 1 und 2 bzw 3 |

| | | | | |
|---|---|---|---|---|
| 0 = positiv // 5 = negativ ¹⁾ 1h H₂O / 5' Superbenzin / 5' Methoxypropylacetat / 5' Xylol | | | | |
| ²⁾ Natronlauge, 2 %ig) // Schwefelsäure, 2 %ig Spritzen : HVLP-Pistole // senkrecht spritzen // ein Spritzgang, 15'ablüften, zweiter Spritzgang, 30'ablüften, Trocknung RTbzw. 30'60°C | | | | |

Die Vorteile bei der erfindungsgemäßen Verwendung sind bessere Emulgierbarkeit, schnellere Trocknung, höhere Härtegrade der damit hergestellten Überzüge, bessere Beständigkeit der Überzüge (z.B. Pendelhärte, Bewitterungsstabilität,. Lösemittetbeständigkeit etc.)

## Patentansprüche

1. Verwendung von 4-Isocyanatomethyl-1,8-octandiisocyanat (Triisocyanatononan, TIN), gegebenenfalls in Abmischung mit weiteren Polyisocyanaten, ausgewählt aus der Gruppe der HDI-, IPDI -Polyisocyanate oder der Polyisocyanate des hydrierten Diphenylmethan-Diisocyanates, als Vemetzer-Komponente zur Herstellung wässriger Zweikomponenten (2K)-Polyurethanlacke und -beschichtungen, **dadurch gekennzeichnet, dass** TIN zu mindestens 50 Masse-% in der Polyisocyanatkomponente vorliegt.

2. Verwendung von TIN nach Anspruch 1 in Abmischung mit HDI-Polyisocyanten vom Isocyanurat- bzw. Iminooxadiazindion- ('Trimerisat-'), Biuret-, Uretdion- (Dimerisat-'), Urethan- ('Prepolymer-') bzw. Allophanat- Strukturtyp als Komponente zur Herstellung wasserdispergierbarer Polyisocyanate, **dadurch gekennzeichnet, daß** TIN zu mindestens ***50*** Masse-% in der Polyisocyanatkomponente vorliegt.

3. Verwendung von TIN nach Anspruch 1 in Abmischung mit IPDI-Polyisocyanten vom Isocyanurat- bzw. Iminooxadiazindion- ('Trimerisat-'), Biuret-, Uretdion- (Dimerisat-'), Urethan- ('Prepolymer-') bzw. Allophanat- Strukturtyp als Komponente zur Herstellung wasserdispergierbarer Polyisocyanate, **dadurch gekennzeichnet, daß** TIN zu mindestens 50 Masse-% in der Polyisocyanatkomponente vorliegt.

4. Verwendung von TIN nach Anspruch 1 in Abmischung mit Polyisocyanten des hydrierten Diphenylmethan-Diisocyanates ('H12MDI, Desmodur® W = eingetragenes Warenzeichen der Fa. Bayer AG) vom Isocyanurat- ('Trimerisat-'), Biuret-, Urethan- ('Prepolymer-') bzw. Allophanat- Strukturtyp als Komponente zur Herstellung wasserdispergierbarer Polyisocyanate, **dadurch gekennzeichnet, daß** TIN zu mindestens 50 Masse-% in der Polyisocyanatkomponente vorliegt.

## Claims

1. Use of 4-isocyanatomethyl-1,8-octane diisocyanate (triisocyanatononane, TIN), if desired in a blend with further polyisocyanates selected from the group consisting of HDI polyisocyanates, IPDI polyisocyanates and the polyisocyanates of hydrogenated diphenylmethane diisocyanate, as a crosslinker component for preparing aqueous two-component (2K) polyurethane paints and coatings, **characterized in that** TIN is present at not less than 50% by mass in the polyisocyanate component.

2. Use of TIN according to Claim 1 in a blend with HDI polyisocyanates of the isocyanurate and/or iminooxadiazinedione ("trimer"), biuret, uretdione ("dimer"), urethane ("prepolymer") and/or allophanate structural type as a component for preparing water-dispersible polyisocyanates, **characterized in that** TIN is present at not less than 50% by mass in the polyisocyanate component.

3. Use of TIN according to Claim 1 in a blend with IPDI polyisocyanates of the isocyanurate and/or iminooxadiazinedione ("trimer"), biuret, uretdione ("dimer"), urethane ("prepolymer") and/or allophanate structural type as a component for preparing water-dispersible polyisocyanates, **characterized in that** TIN is present at not less than 50% by mass in the polyisocyanate component.

4. Use of TIN according to Claim 1 in a blend with polyisocyanates of hydrogenated diphenylmethane diisocyanate ("H12MDI", Desmodur® W = registered trade mark of Bayer AG) of the isocyanurate ("trimer"), biuret, urethane ("prepolymer") and/or allophanate structural type as a component for preparing water-dispersible polyisocyanates, **characterized in that** TIN is present at not less than 50% by mass in the polyisocyanate component.

## Revendications

1. Utilisation du 4-isocyanatométhyl-1,8-octanediisocyanate (triisocyanatononane, TIN) éventuellement en mélange avec d'autres polyisocyanates choisis dans le groupe des polyisocyanates du type HDI, du type IPDI ou des polyisocyanates du diphénylméthane-diisocyanate hydrogéné, en tant que composant réticulant pour la préparation de vernis et produits de revêtement aqueux à 2 composants à base de polyuréthane, **caractérisée en ce que** le TIN est présent en proportion d'au moins 50 % en poids dans le composant polyisocyanate.

2. Utilisation du TIN selon la revendication 1 en mélange avec des polyisocyanates du type HDI à structure d'isocyanurate ou d'iminooxadiazine-dione ("trimère"), de biuret, d'urét-dione ("dimère"), d'uréthane ("prépolymère") ou d'allophanate en tant que composant pour la préparation de polyisocyanates dispersables à l'eau, **caractérisée en ce que** le TIN est présent en proportion d'au moins 50 % en poids dans le composant polyisocyanate.

3. Utilisation du TIN selon la revendication 1 en mélange avec des polyisocyanates du type IPDI à structure d'isocyanurate ou d'iminooxadiazine-dione ("trimère"), de biuret, d'urét-dione ("dimère"), d'uréthane ("prépolymère") ou d'allophanate en tant que composant pour la préparation de polyisocyanates dispersables à l'eau, **caractérisée en ce que** le TIN est présent en proportion d'au moins 50 % en poids dans le composant polyisocyanate.

4. Utilisation du TIN selon la revendication 1 en mélange avec des polyisocyanates du diphénylméthane-diisocyanate hydrogéné ("H₁₂MDI, produit du commerce Desmodur® W, marque déposée de la firme Bayer AG) à structure d'isocyanurate ("trimère") de biuret, d'uréthane ("prépolymère") ou d'allophanate en tant que composant pour la préparation de polyisocyanates dispersables à l'eau, **caractérisée en ce que** le TIN est présent en proportion d'au moins 50 % en poids dans le composant polyisocyanate.
